# EUROPÄISCHE PATENTANMELDUNG

(11) **EP 1 271 034 A1**
(43) Veröffentlichungstag der Anmeldung: **02.01.2003**
(21) Anmeldenummer: 01115817.7
(22) Anmeldetag: 28.06.2001
(51) Int. Cl.: F16L 11/12

(54) **Coextrudierter Kunststoffschlauch**

(71) Anmelder: ALBER KUNSTSTOFFTECHNIK GmbH, D-77971 Kippenheim (DE)
(72) Erfinder: Mehne, Georg, 77972 Mahlberg (DE)
(74) Vertreter: Barz, Peter, Dr.

(57) **Zusammenfassung**

Es wird ein Kunststoffschlauch beschrieben, der ein Coextrudat aus mindestens zwei Teilschichten umfaßt, wobei eine Teilschicht des Coextrudats ein Farbmittel enthält. Der Kunststoffschlauch kann als Schlauchelement für komplexere Schlauchaufbauten verwendet werden. Durch die erzielbaren dekorativen Effekte eignet sich der Schlauch insbesondere für den Sanitärbereich.

## Beschreibung

Die Erfindung betrifft einen coextrudierten Kunststoffschlauch aus mindestens zwei Teilschichten und einen diesen coextrudierten Kunststoffschlauch umfassenden Schlauchaufbau sowie ein Verfahren zur Herstellung des coextrudierten Kunststoffschlauches.

Die Farbgebung bei Kunststoffschläuchen wird heute in der Regel dadurch erreicht, daß dem Kunststoff während der Verarbeitung Pigmente zugesetzt werden. Diese direkten Einfärbungen erreichen jedoch bei weitem nicht die Farbintensität lackierter Oberflächen, insbesondere kann kein ausreichender metallischer Glanz erreicht werden. Nur über einen sehr hohen Pigmentanteil, wie er bei Farben und Lacken verwendet wird, sind entsprechende Effekte realisierbar. Wird dem Grundkunststoff jedoch ein entsprechend hoher Pigmentanteil beigegeben, leiden Verarbeitbarkeit und mechanische Eigenschaften in so hohem Maße, daß keine brauchbare Schlauchschicht, z.B. die Außenhaut für einen Schlauch, realisiert werden kann. Auch die besten metallischen und besonders chromartigen Einfärbungen wirken stumpf und bleiern.

Beim Lackieren wird ein hoher metallischer Glanz, wie z.B. ein Chromeffekt, erreicht, weil bei solchen Lacken großflächige Metallpartikel relativ zur Schichtdicke eingesetzt werden, die sich parallel zum Untergrund ausrichten und damit eine den Vollmetallflächen ähnliche Reflexion aufweisen. Fügt man Kunststoffen in der Schmelze entsprechende Pigmente bei, richten sich diese Teilchen nicht parallel zur Oberfläche aus und erzeugen damit auch nicht den typischen metallischen Glanz.

Eine weitere übliche Methode zur Erzielung von metallartigen Oberflächen besteht darin, metallische oder metallisierte Komponenten mit in den Schlauchaufbau einzubeziehen. Damit bleibt aber immer die Struktur dieser Elemente sichtbar, so daß das gewünschte Aussehen, das z.B. in der Sanitärindustrie erzielt werden soll, um flexible Kunststoffschläuche harmonisch in die Optik der Metallarmaturen und Wandstangen einzubinden, nicht erreicht wird.

Einer denkbaren äußeren Lackierung, die den gewünschten Effekt erzielen könnte, fehlt der notwendige Oberflächenschutz. Außerdem besteht die Gefahr der Rißbildung am Farbfilm, wenn der Schlauch beim Gebrauch bewegt und damit gebogen wird.

In DE-A-4419120, EP-A-685675 und EP-A-685676 wird zur Einfärbung und/oder Metallisierung der Einsatz von Kleberschichten aufweisenden Heißprägefolien beschrieben, wobei auf einer Seite, bevorzugt der Außenseite, der Kleberschicht eine Einfärbung und/oder Metallisierung vorhanden ist. Nach diesem Verfahren ist es allerdings kaum möglich, komplexere Schlauchaufbauten z.B. mit Hohlräumen oder stark strukturierten Oberflächen einzusetzen.

In der DE-A-19511216 wird zur Färbung von Schläuchen eine Lackiertechnik angewandt. Dabei wird ein doppelwandiger Schlauch aus einem Außen- und einem Innenschlauch sowie einer Einfärbung zwischen diesen beiden Schläuchen beschrieben, bei dem die Innenseite des Außenschlauchs bzw. die Außenseite des Innenschlauchs unmittelbar mit einer Farbe versehen wird. Die in dieser Anmeldung offenbarte Lackiertechnik läßt sich aber nur schwer in einem kontinuierlichen Produktionsprozeß integrieren.

Flexible Schläuche mit guten Gebrauchseigenschaften sind mehrschichtig aufgebaut und mit Verstärkungselementen und/oder Hohlräumen versehen. Ein Ziel der Erfindung bestand darin, den sichtbaren Flächen von Kunststoffschläuchen einen Effekt zu verleihen, der dem galvanisch veredelter oder lackierter Flächen sehr nahe kommt und z.B. einen Metalleffekt ermöglicht. Dieses Verfahren soll auch für komplexe Schlauchaufbauten geeignet sein und überdies eine einfache und kontinuierliche Herstellung der Schläuche ermöglichen. Weiterhin bestand ein Ziel in der Bereitstellung besonderer Eigenschaften, wie z.B. Schmutzabweisung oder Gleitfähigkeit, durch eine Kombination von Materialien zu erzielen, die sonst aufgrund ihrer Eigenschaften für einen Schlauchaufbau nicht geeignet sind.

Überraschenderweise werden die vorstehenden Anforderungen durch einen Kunststoffschlauch erfüllt, der mindestens zwei coextrudierte Teilschichten umfaßt, wobei eine Teilschicht des Coextrudats ein Farbmittel enthält. Dieser coextrudierte Kunststoffschlauch eignet sich als Schlauchelement für einen komplexeren Schlauchaufbau.

Die Coextrusion ist ein dem Fachmann geläufiges Verfahren, bei dem mindestens zwei Extrudat-Materialien einem Werkzeug getrennt als Schmelze zugeführt und erst kurz vor dem Austritt aus der Düse zusammengeführt werden, so daß sich je nach Anzahl der verwendeten Materialien ein zwei- oder mehrschichtiger Aufbau des Coextrudats ergibt.

Bei den eingesetzten Extrudat-Materialien zur Herstellung des Coextrudats handelt es sich um die üblicherweise für die Herstellung von Kunststoffschläuchen verwendeten Materialien, die erfindungsgemäß zu einem Coextrudat coextrudiert werden. Das Extrudat-Material für die das Farbmittel enthaltende Teilschicht kann abgesehen von dem Farbmittel aus demselben Grundmaterial hergestellt werden wie die anderen Teilschichten oder einem verschiedenen Material. Grundsätzlich ist jedes geeignete Material einsetzbar, das extrudierbar ist. In der Regel handelt es sich um thermoplastische oder elastomere Materialien.

Die Extrudat-Materialien enthalten als Hauptkomponente einen Kunststoff, der üblicherweise zur Schlauchherstellung eingesetzt wird. Dabei handelt es sich bevorzugt um einen weichen, thermoplastischen oder elastomeren Kunststoff oder Kautschuk. Geeignete Kunststoffe sind beispielsweise PVC, insbesondere Weich-PVC, Polyurethan, Siliconkautschuk, Polyethylen, z.B. HD-PE oder LLD-PE, thermoplastische Polyester oder Ethylen-Copolymere, wie Ethylen-Vinylacetat-Copolymer. Es können auch Mischungen von zwei oder mehreren Kunststoffen für das Extrudat-Material verwendet werden. Für die innere Teilschicht bieten sich beispielsweise HD-PE, Polyurethan oder thermoplastische Polyester an. Für die äußere bzw. die äußeren Teilschichten bieten sich beispielsweise LLD-PE oder PVC an.

Die Extrudat-Materialien können neben den Kunststoffen auch Zusatzstoffe zur Veränderung der Grundeigenschaften des Materials oder zur besseren Verarbeitung enthalten. Beispiele für einsetzbare Zusatzstoffe sind Modifikationsmittel, Weichmacher, Füllstoffe, Verstärkungsmaterialien, Flammschutzmittel und Antistatikmittel sowie Stabilisatoren, wie Wärme- und Lichtstabilisatoren, z.B. Antioxidationsmittel, Ozonschutzmittel und UV-Absorptionsmittel, Gleitmittel und Trennmittel. Die konkret eingesetzten Zusatzstoffe richten sich nach den gewünschten Eigenschaften, der Art der Verarbeitung und den eingesetzten Kunststoffen. Der Fachmann kann die geeigneten Kunststoffe und Zusätze ohne weiteres anhand seines Fachwissens auswählen. Einen Überblick bieten z.B. die Artikel Kunststoffe in Ullmanns Encyclopädie der technischen Chemie, 4. Aufl., Bd. 15.

Die Zugabe der Zusatzstoffe zum Extrudat-Material erfolgt z.B. durch Zugabe bei der Herstellung des Kunststoffs, durch Zugabe in einem gesonderten Compoundierschritt oder beim Extrudiervorgang durch gesonderte Zugabe des oder der Zusatzstoffe.

Bei dem in mindestens einer Teilschicht enthaltenen Farbmittel kann es sich um ein Farbmittel oder um eine Mischung von zwei oder mehreren Farbmitteln handeln. Die Farbmittel werden unter Berücksichtigung des eingesetzten Kunststoffs ausgewählt. Bei dem Farbmittel kann es sich um einen Farbstoff und/oder ein Pigment handeln, wobei der Einsatz von Pigmenten besonders bevorzugt ist. Durch das Farbmittel wird ein Farb- oder Metalleffekt erzielt, so daß zumindest in Teilbereichen eine sichtbare Einfärbung des Kunststoffschlauches erreicht werden kann und entsprechend gefärbte bzw. metallisierte Kunsstoffschläuche erhalten werden.

Beispiele für einsetzbare Farbstoffe sind Monoazo-Farbstoffe, Diazo-Farbstoffe, Anthrachinon-Farbstoffe, Chinophthalon-Farbstoffe, Naphthazin-Farbstoffe, Perinon-Farbstoffe, Pyrazolon-Farbstoffe, Cumarin-Farbstoffe, Thioindigo-Farbstoffe, Thioxanthen-Farbstoffe und Nigrosinbasen oder deren Salze.

Bei den besonders bevorzugten Pigmenten kann es sich um anorganische oder organische Pigmente handeln. Zu den anorganischen Pigmenten zählen auch Glanzpigmente, wie Metalleffektpigmente und Perlglanzpigmente, aber auch Metallpigmente, Leucht-, Fluoreszenz- und Phosphoreszenz-Pigmente. Besonders bevorzugt eingesetzte Pigmente sind Metalleffektpigmente.

Beispiele für anorganische Pigmente sind Chromat-Pigmente, z.B. Mischphasenpigmente der Zusammensetzung Pb(Cr, S)O₄, oder Pb(Cr, Mo, S)O₄, Cadmium-Pigmente, z.B. Cadmiumsulfide oder Cadmiumsulfide/ selenide, Mischphasenpigmente, z.B. Nickel-Antimon-Titan-Pigment, Chrom-Antimon-Titan-Pigment, Cobaltoxid-Spinelle oder Oxide von Eisen, Chrom und Kupfer, Eisenoxid-Pigmente, Chromoxid-Pigmente, Titandioxid-Pigmente oder Zinksulfid-Pigmente.

Metalleffektpigmente bestehen im allgemeinen aus hochglänzenden schuppenförmigen Metallteilchen. Die Schuppen oder Blättchen haben z.B. einen Durchmesser von wenigen Millimetern (Flitter) bis zu wenigen Mikrometern (Bronzepulver), wobei das Verhältnis Dicke zu Durchmesser im allgemeinen etwa 1:50 bis 1:250 beträgt. Man bezeichnet diese Pulver häufig als Bronzepulver. Die Metalleffekt-Pigmente bestehen meist aus Reinaluminium (Aluminiumbronzepulver oder Silberbronzepulver), Reinkupfer (Kupferbronzepulver) oder Messing (Goldbronzepulver).

Beispiele für Perlglanzpigmente sind durch ein besonderes Verfahren hergestelltes basisches Bleicarbonat, Bismutoxidchlorid, auf Glimmer niedergeschlagenes Titandioxid und Interferenzpigmente.

Beispiele für organische Pigmente sind Diarylid-, Pyrazolon-, Diazo-, β-Oxynaphthoesäure-, β-Oxynaphthoesäurearylid-Pigmente, Derivate der Naphthalin- und Perylentetracarbonsäure und des Dioxans, Chinacridon-, Thioindigo-, Isoindolinon-Kondensations-Pigmente und Kupferphthalocyanin-Pigmente.

Die Einfärbung bzw. Metallisierung des Extrudats-Materials bzw. des Kunststoffs für die das Farbmittel enhaltende Teilschicht erfolgt auf übliche Weise, z.B. durch Massefärbung bei der Herstellung des Kunststoffs oder durch Massefärbung bei der Verarbeitung der Kunststoff-Pulver oder -Granulate, z.B. in einem vorhergehenden Compoundierschritt oder direkt beim Extrudiervorgang durch gesonderte Zugabe des Farbmittels.

Die Extrudat-Materialien werden dann auf übliche Weise unter Bildung eines coextrudierten Schlauchs coextrudiert. Dabei werden die mindestens zwei Extrudat-Materialien in gesonderten Extrudern unter Verwendung eines für die Coextrusion geeigneten Werkzeugs coextrudiert. Wie erwähnt, können die Zusatzstoffe oder Farbmittel dem Extrudat-Material erst im Extruder zugesetzt werden. Es werden übliche Extruder eingesetzt, z.B. Ein- oder Doppelschneckenextruder. Die eingesetzten Bedingungen, wie Temperatur, Verweilzeit und Druck, hängen vom eingesetzten Material ab und sind dem Fachmann bekannt. Auch bei den gegebenfalls auszuführenden Nachbehandlungen, wie Äquilibrierung oder Abkühlung, handelt es sich um dem Fachmann geläufige Verfahrensschritte.

Dem Fachmann ist ohne weiteres verständlich, daß durch die spezielle Konstruktion des Werkzeugs, insbesondere der Zuführungen der Schmelzen zur Düse, sich leicht und in sehr vorteilhafter Weise Farb- oder Metalleffekte strukturieren lassen, so daß sich erfindungsgemäß ohne weiteres gewünschte spezielle Musterungen und damit spezielle dekorative Wirkungen erzielen lassen. Es können auch zwei oder mehr Extrudat-Materialien, die unterschiedliche Farbmittel enthalten, eingesetzt werden, z.B. um Musterungen mit unterschiedlichen Farb- und/oder Metalleffekten zu erzielen.

In der vorliegenden Erfindung ist die einzufärbende Wandung des Kunststoffschlauches nicht einschichtig, sondern besteht aus mindestens zwei Teilschichten, die durch Coextrusion gebildet werden. Es können je nach Bedarf auch mehr als zwei Teilschichten, z.B. drei oder vier Teilschichten, durch Coextrusion gebildet werden. Mindestens eine Teilschicht enthält ein Farbmittel und vorzugsweise enthält mindestens eine Teilschicht kein Farbmittel. Bei einer bevorzugten Ausführungsform handelt es sich um einen einwandigen coextrudierten Kunststoffschlauch, wobei 1 Teilschicht ein Farbmittel enthält und die anderen frei von einem Farbmittel sind.

Die das Farbmittel enthaltende Teilschicht ist bevorzugt nicht die äußerste Teilschicht. Bei zwei Teilschichten ist die das Farbmittel enthaltende Teilschicht also bevorzugt die innere Teilschicht. Das Coextrusionsverfahren ermöglicht die Bildung sehr dünner Teilschichten, die mit einem extrem hohen Anteil an Farbmittel versehen werden können, ohne die oben genannten Nachteile bei der Verarbeitung und den mechanischen Eigenschaften in Kauf nehmen zu müssen.

Die Dicke der Teilschichten hängt naturgemäß auch von der Wandstärke und dem Durchmesser des herzustellenden Kunststoffschlauches ab. Einer der Vorteile des erfindungsgemäßen Verfahrens besteht in der großen Variabilität bezüglich der herstellbaren Schlauchgeometrie. Es können sehr dickwandige Schläuche, die als solche verwendet werden können, oder auch sehr dünnwandige Gebilde, die als Element eines komplexen Schlauchaufbaus geeignet sind, hergestellt werden.

In einer Ausführungsform ist der aus mindestens zwei Teilschichten bestehende coextrudierte Kunststoffschlauch einwandig. In dieser Variante kann der coextrudierte Kunststoffschlauch als solcher, ähnlich einem herkömmlichen Brauseschlauch, verwendet werden, wobei die Wandstärke entsprechend groß gewählt wird. Prinzipiell kann dieser einwandige Schlauch eine Verstärkung aufweisen, z.B. eine Textilverstärkung, die in das Extrudat einläuft. In einer zweiten Ausführungsform der Erfindung dient der coextrudierte Kunststoffschlauch als Komponente eines komplexen Schlauchaufbaus, z.B. als Außenschlauch. Bei dieser Variante wird insbesondere ein dünnwandiger coextrudierter Kunststoffschlauch eingesetzt.

Die Menge an Farbmittel in der Teilschicht hängt von dem eingesetzten Farbmittel, dem eingesetzten Kunststoff und dem gewünschten Farb- bzw. Metallic-Effekt ab. Durch die Erfindung wird es möglich, sehr hohe Anteile an Farbmittel in der Kunststoff-Teilschicht zu verwirklichen.

Aufgrund der Strömungsverhältnisse bei der Coextrusion richten sich bei entsprechend günstiger Wahl der einzelnen Parameter die Färbmittel-Teilchen, bevorzugt die Pigmentteilchen, annähernd parallel zur Oberfläche aus, womit ein Effekt erreicht wird, der dem von Lacken nahe kommt. Das Coextrudat wiederum ist im plastischen Zustand beliebig formbar, kann somit jede gewünschte Kontur annehmen und bleibt je nach Materialwahl auch im erkalteten Zustand flexibel.

Durch das erfindungsgemäße Verfahren werden coextrudierte Kunststoffschläuche erhalten, die besondere optischen oder eigenschaftsspezifische Effekte aufweisen. Bevorzugt ist eine nach innen gerichtete Teilschicht mit Farbmitteln, vorzugsweise Pigmenten und insbesondere Metalleffektpigmenten, eingefärbt. Es versteht sich, daß bei einer gefärbten Teilschicht, die nach innen gerichtet ist, die darüberliegenden Teilschichten insbesondere so ausgelegt sind, daß der Farb- oder Metalleffekt der gefärbten Teilschicht, eventuell unter Modifikation durch die äußere Teilschicht, für den Betrachter zumindest in Teilbereichen sichtbar ist. Es handelt sich dann insbesondere um eine mehr oder weniger transparente äußere Teilschicht.

Durch den Einsatz des erfindungsgemäßen Verfahrens, z.B. für die Außenhülle eines Schlauchaufbaus, können mehrere Teilschichten mit unterschiedlichen Eigenschaften kombiniert werden. Beispielsweise ist es möglich, einen zusätzlichen Schutz der Farbmittel enthaltenden Teilschicht nach innen durch eine dritte Teilschicht zu erreichen.

Ein weiterer Vorteil dieser Technik besteht bei entsprechender Materialauswahl darin, daß die innerste Teilschicht der zwei- oder mehrschichtigen Wandung an den Kontaktflächen mit angrenzenden Schlauchelementen versiegelnd wirken kann und damit eine ausreichende Haftung zwischen den Schlauchelementen erreicht wird.

Durch entsprechende Materialkombination lassen sich auch weitere spezifische Eigenschaften, z.B. des Außenschlauches, realisieren, wie beispielsweise schmutzabweisende oder reibungsreduzierende Eigenschaften oder eine besonders hohe Siegelfähigkeit zum übrigen Schlauchaufbau.

Mit dem erfindungsgemäßen Verfahren ist es möglich, die Einzelschichtstärken so zu wählen, daß in Coextrusion glatte Schläuche mit Farb- bzw. Metalleffekten produziert werden können und damit die oben beschriebenen optischen, verarbeitungstechnischen Probleme und Nachteile für die mechanischen Eigenschaften bei der heute üblichen Einfärbung umgangen werden. Durch entsprechende Materialwahl lassen sich zusätzlich besondere Eigenschaften des fertigen Produktes erzielen, ohne die Schwierigkeiten nicht ausreichender Haftung der einzelnen Schlauchelemente untereinander, die bei Verfahren auftreten, bei denen mehrere Verarbeitungsschritte nacheinander vorgenommen werden.

In einen solchen zwar komplex aufgebauten, aber in einem Verarbeitungsschritt gefertigten Schlauch ebenso wie in den coextrudierten Schlauch als solchen können auch Verstärkungselemente, z.B. textile Verstärkungselemente, zur axialen oder radialen Verstärkung integriert werden, wie z.B. Längsfäden.

Der erfindungsgemäße Kunststoffschlauch eignet sich auch insbesondere als Schlauchelement für einen komplexen Schlauchaufbau, der aus einem oder mehreren Schlauchelementen und gegebenenfalls zusätzlichen Elementen, wie Umflechtungen, Bewehrungen und Verstärkungswendeln, aufgebaut ist. Der erfindungsgemäße coextrudierte Kunststoffschlauch eignet sich beispielsweise als Außenschlauch, Zwischenschicht, Verstärkungselement oder Innenschlauch des Schlauchaufbaus. Bevorzugt wird die äußere Wandung des Schlauchaufbaus durch das Coextrudat gebildet. Natürlich wird der Schlauchaufbau insbesondere so gewählt, daß der mit dem coextrudierten Schlauchelement erzeugte optische Effekt auch sichtbar ist.

Ein besonderer Vorteil besteht darin, daß die Einfärbung des Kunststoffschlauchs kontinuierlich bei der Herstellung erfolgen kann, so daß dies ohne weiteres in einem komplexen kontinuierlichen Herstellungsverfahren für einen Schlauchaufbau integriert werden kann, ohne daß das Verfahren für die Einfärbung unterbrochen werden muß.

Der erfindungsgemäße Kunststoffschlauch und der erfindungsgemäße Schlauchaufbau eignen sich insbesondere zur Erzielung dekorativer Effekte. Anwendungsgebiete sind der Sanitärbereich, z.B. für Küchen- und Badarmaturen, und auch Schläuche, die in Bohrungen geführt werden, z.B. im Sanitärbereich für versenkbare Küchen- und Badarmaturen. Eine besonders bevorzugte Anwendung ist die Verwendung als Brauseschlauch. Der Schlauch kann z.B. auch als Druckluftschlauch für Druckluftwerkzeuge und -pistolen verwendet werden.

## Patentansprüche

1. Coextrudierter Kunststoffschlauch aus mindestens zwei Teilschichten, von denen eine Teilschicht ein Farbmittel enthält.

2. Kunststoffschlauch nach Anspruch 1, **dadurch gekennzeichnet, daß** das Farbmittel ein Pigment, insbesondere ein Metalleffekt-Pigment, ist.

3. Kunststoffschlauch nach Anspruch 1 oder 2, **dadurch gekennzeichnet, daß** die das Farbmittel enthaltende Teilschicht nicht die äußerste Teilschicht ist.

4. Kunststoffschlauch nach Anspruch 3, **dadurch gekennzeichnet, daß** die das Farbmittel enthaltende Teilschicht die innerste Teilschicht ist.

5. Kunststoffschlauch nach einem der Ansprüche 1 bis 4, **dadurch gekennzeichnet, daß** der durch das Farbmittel bewirkte Farb- oder Metalleffekt ganz oder teilweise unter Bildung einer Musterung strukturiert ist.

6. Kunststoffschlauch nach einem der Ansprüche 1 bis 5, **dadurch gekennzeichnet, daß** er axiale und/oder radiale Verstärkungselemente aufweist.

7. Kunststoffschlauch nach einem der Ansprüche 1 bis 6, **dadurch gekennzeichnet, daß** mindestens eine an der Oberfläche befindliche Teilschicht versiegelnde, schmutzabweisende oder gleiffähige Eigenschaften aufweist.

8. Schlauchaufbau, umfassend einen coextrudierten Kunststoffschlauch nach einem der Ansprüche 1 bis 7.

9. Schlauchaufbau nach Anspruch 8, **dadurch gekennzeichnet, daß** der coextrudierte Kunststoffschlauch den Außenschlauch, eine Zwischenschicht, ein Verstärkungselement oder den Innenschlauch des Schlauchaufbaus darstellt.

10. Schlauchaufbau nach Anspruch 8 oder 9, **dadurch gekennzeichnet, daß** er eine Umflechtung und/oder Bewehrung als zusätzliche Schlauchelemente aufweist.

11. Verfahren zur Herstellung eines coextrudierten Kunststoffschlauchs nach Anspruch 1, dadurch gekennzeichent, daß mindestens zwei Extrudat-Materialien coextrudiert werden, wobei ein Extrudat-Material ein Farbmittel enthält.
